Europäisches Patentamt

European Patent Office

Office européen des brevets

(19)

(11) Veröffentlichungsnummer: **0 141 323**

**A1**

(12) **EUROPÄISCHE PATENTANMELDUNG**

(21) Anmeldenummer: **84112359.9**

(22) Anmeldetag: **13.10.84**

(51) Int. Cl.⁴: **A 01 C 5/06**

(30) Priorität: **28.10.83 US 546606**

(43) Veröffentlichungstag der Anmeldung:
**15.05.85 Patentblatt 85/20**

(84) Benannte Vertragsstaaten:
**DE FR GB IT**

(71) Anmelder: **DEERE & COMPANY**
**1 John Deere Road**
**Moline Illinois 61265(US)**

(72) Erfinder: **Ciark, Richard Hugo**
**614 Terrace Dr.**
**Blue Grass Iowa 52726(US)**

(72) Erfinder: **Swales, Barton Lee**
**1708 E. 4th Street**
**Coal Valley Illinois 61240(US)**

(72) Erfinder: **Lundie, William Robert**
**3645 8th Street**
**East Moline Illinois 61244(US)**

(74) Vertreter: **Sartorius, Peter et al,**
**DEERE & COMPANY European Office, Patent**
**Department Postfach 503 Steubenstrasse 36-42**
**D-6800 Mannheim 1(DE)**

(54) **Sävorrichtung.**

(57) Die Zudeckeinrichtung (17) einer Sävorrichtung (10) ist über eine horizontal verschwenkbare Platte (31) an einer am Rahmen (11) der Sävorrichtung angeordneten Platte (32) angeschlossen, damit die Zudeckeinrichtung (17) stets genau zur Furche ausgerichtet werden kann. Hierzu sind die beiden Platten über einen exzentrisch ausgebildeten Nocken (40) verbunden, der durch Drehen die Platte (31) mit der Zudeckeinrichtung (17) um einen Gelenkbolzen (33) schwenkt. Nach Verstellen der Zudeckeinrichtung (17) läßt sich diese mittels eines durch den Nocken (40) geführten Tragzapfens (44) feststellen.

FIG. 1

FIG. 4

EP 0 141 323 A1

Croydon Printing Company Ltd.

## Sävorrichtung

Die Erfindung bezieht sich auf eine Sävorrichtung für eine Sämaschine, die an einem Rahmen der Sämaschine angeordnet ist und an einem verstellbar angeordneten Tragarm eine Zudeckeinrichtung aufweist.

Es ist bereits eine Sämaschine mit einer Sävorrichtung der eingangs aufgeführten Art bekannt (US-PS 4 307 674), die mit einer Zudeckeinrichtung ausgerüstet ist, die aus zwei parallel zueinander verlaufenden Scheiben besteht. Die Scheiben sind mittels eines vertikal verschwenkbaren Tragarmes an den Rahmen der Sävorrichtung angeschlossen. Auf diese Weise lassen sich die einzelnen Scheiben der Sävorrichtung lediglich in ihrer Höhe verstellen.

Demgegenüber liegt der Erfindung die Aufgabe zugrunde, die Zudeckeinrichtung derart auszubilden und anzuordnen, daß mit einfachen baulichen Mitteln eine einfache Anpassung an die durch die Sävorrichtung gebildete Furche möglich ist. Diese Aufgabe ist dadurch gelöst worden, daß der Zudeckeinrichtung eine Stellvorrichtung zugeordnet ist, die mindestens eine an den Rahmen der Sävorrichtung gelenkig angeschlossene, um eine vertikale Achse verstellbare Platte zur Aufnahme der Tragarme aufweist, wobei zur Verstellung der Platte um die vertikale Achse eine Nockenvorrichtung wirkungsmäßig mit dem Rahmen und der Platte verbunden ist. Durch die vorteilhafte Ausbildung und Anordnung der Zudeckeinrichtung mit der zugehörigen Stellvorrichtung kann in kürzester Zeit eine Anpassung an beispielsweise eine seitlich versetzt gebildete Furche vorgenommen werden, indem hierzu die Zudeckeinrichtung mittels der Stellvorrichtung entweder nach rechts oder nach links um eine vertikal verlaufende Achse verschwenkt wird. Hierzu ist es vorteilhaft, daß die Platte zur Aufnahme der Zudeckeinrichtung über den zugehörigen Nocken auf einfache Weise verschwenkt werden kann, damit stets gewährleistet ist, daß die durch die Sävorrichtung gebildete Furche nach Eingabe des Saatgutes richtig verschlossen wird. Um eine leichte und relativ schnelle Verstellung der Zudeckeinrichtung durchführen zu können, ist es gemäß der Erfindung vorteilhaft, daß die Platte eine kreisförmige Öffnung, den daran angeschlossenen Rahmen mit einem Schlitz und der Nocken einen um eine erste Nockenachse drehbaren, in der Öffnung aufgenommenen Kragen aufweist, wobei der Nocken über einen Tragzapfen die Platte gelenkig mit dem Rahmen verbindet, der um mindestens eine vertikale Achse verschwenkbar ist, und daß der Nocken eine zweite vertikale Achse aufweist, die parallel und mit Abstand zur ersten Nockenachse verläuft, die koaxial zum Nocken angeordnet ist. Dabei ist es ferner vorteilhaft, daß der Kragen des Nockens exzentrisch zur ersten Nockenachse verläuft. Da der Nocken einen exzentrisch zur Drehachse des Nockens angeordneten Kragen aufweist, der in der Platte drehbar aufgenommen ist, läßt sich hier auf einfache Weise der zugeordnete Rahmen horizontal verschwenken und somit genau über die Furche einstellen, wenn diese beispielsweise seitlich versetzt zur Längsmittelachse der Sävorrichtung verläuft.

In weiterer Ausgestaltung der Erfindung ist es vorteilhaft, daß der Nocken mit einem Stellteil ausgerüstet ist, dem eine Skaleneinteilung zugeordnet sein kann. Um eine einwandfreie und schnelle Verstellung der Zudeckeinrichtung zu ermöglichen, ist es vorteilhaft, daß der Nocken bzw. die verschwenkbare Platte über Feststellelemente arretierbar ist. Mittels der Feststellelemente läßt sich nach erfolgter Anpassung der Zudeckeinrichtung diese wieder über die Feststellelemente so festsetzen, daß ein unbeabsichtigtes Verstellen der Zudeckeinrichtung vermieden werden kann.

In weiterer Ausgestaltung der Erfindung ist es vorteilhaft, daß der Tragzapfen sich durch den Schlitz in einer am Rahmen angeordneten Platte und durch die kreisrunde Öffnung sowie durch eine im Nocken vorgesehene Bohrung erstreckt und mittels einer Mutter sicherbar ist, wobei durch Drehen des Nockens um die erste Achse der Tragzapfen in den Schlitz verschoben wird. Ein Verschwenken des Tragzapfens zur Aufnahme des Nockens wird dadurch vermieden, daß er zwei gegenüberliegende flache Führungsflächen aufweist, die im Schlitz aufgenommen sind und ein Drehen des Tragzapfens im Schlitz verhindern. Vorteilhaft ist es außerdem, daß an der horizontal verschwenkbaren Platte die Zudeckeinrichtung mittels eines vertikal verschwenkbaren Tragarmes angeschlossen ist, wobei die Platte über einen vertikal verlaufenden Gelenkbolzen an die zweite Platte gelenkig angeschlossen ist.

Im folgenden wird die Erfindung anhand von lediglich einen Ausführungsweg darstellenden Zeichnungen näher erläutert. Es zeigt:

Fig. 1    eine perspektivische Darstellung einer Sä- bzw. Pflanzvorrichtung,

Fig. 2    eine Draufsicht der Furchenzudeckvorrichtung gemäß Fig. 1,

Fig. 3    eine Stellvorrichtung der Furchenzudeckvorrichtung gemäß Fig. 2 in auseinandergezogener Darstellung,

Fig. 4    einen Querschnitt entlang der Linie 4 - 4 gemäß Fig. 3,

Fig. 5    eine ähnliche Ansicht wie in Fig. 2, wobei die Furchenzudeckvorrichtung mit Bezug auf die Mittellinie der Pflanz- bzw. Sävorrichtung nach links verstellt ist,

Fig. 6    eine ähnliche Ansicht wie in Fig. 2, wobei die Furchenzudeckvorrichtung mit Bezug auf die Mittellinie der Pflanz- bzw.
Sävorrichtung nach rechts verstellt ist,

Fig. 7    eine Draufsicht der gesamten Pflanzvorrichtung und der Furchenzudeckvorrichtung
in ausgezogenen Linien, wenn diese auf
der Längsmittelebene der Pflanz- bzw. Sämaschine verläuft,

Fig. 8    eine vergrößerte Darstellung einer Nockenvorrichtung gemäß Fig. 5,

Fig. 9    eine vergrößerte Darstellung der Nockenvorrichtung gemäß Fig. 6, die mit Bezug
auf die Mittellinie (Fig. 2) nach links
verstellt ist.

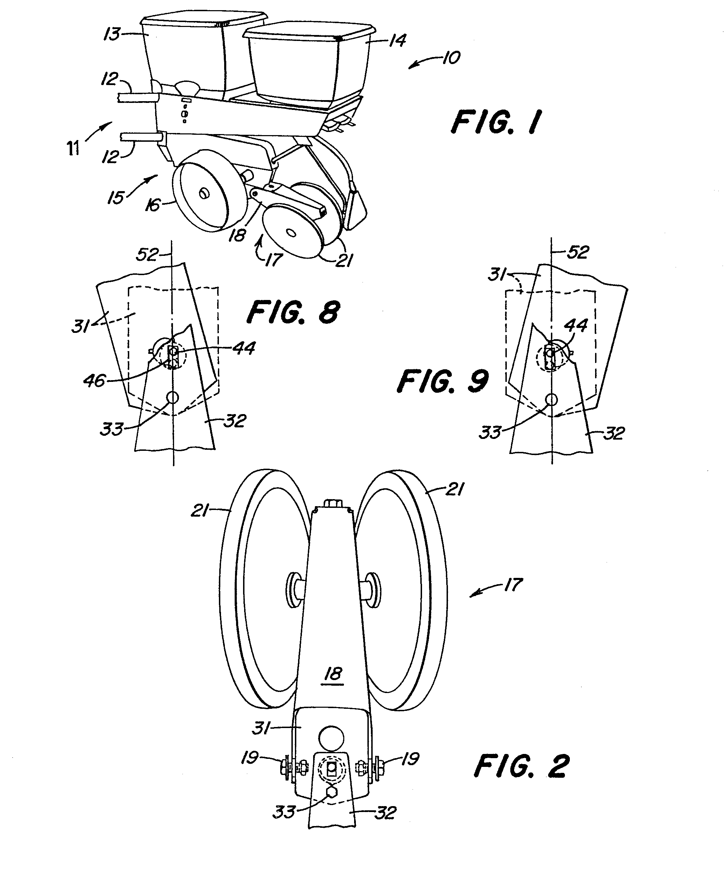

In der Zeichnung ist in Fig. 1 mit 10 eine Sävorrichtung
bezeichnet, die mit einer Zudeckeinrichtung 17 ausgerüstet
ist. Die Sävorrichtung 10 weist einen Rahmen 11 mit parallel zueinander verlaufenden Lenkern 12 auf, die an einen
Hauptrahmen 22 schwenkbar angeschlossen sind. Auf dem Rahmen 11 sind ein Saatbehälter 13 sowie ein Düngerbehälter 14,
ein Furchenöffner 15, eine Stützradeinrichtung 16 und die
Zudeckeinrichtung 17 angeschlossen, die mit einer Stellvorrichtung, wie nachträglich näher erläutert, ausgerüstet
ist.

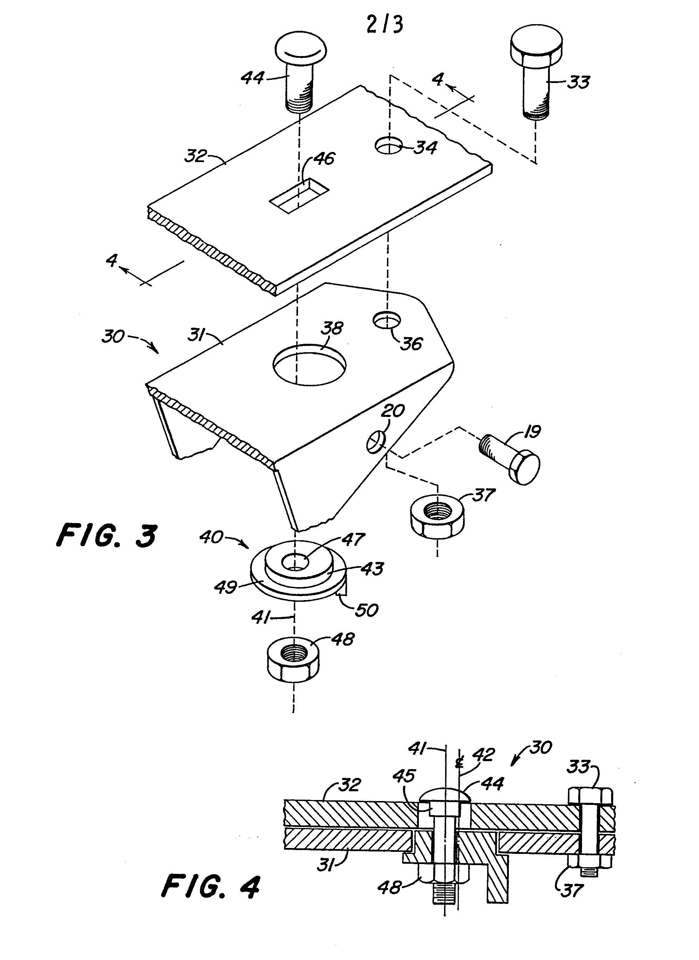

In den Figuren 3 und 4 ist die Stellvorrichtung 30 für die
Zudeckeinrichtung 17 näher veranschaulicht. Die Stellvorrichtung 30 weist eine horizontal verlaufende Platte 31
auf, die mittels eines Gelenkbolzens 33 an eine ebenfalls
horizontal verlaufende Platte schwenkbar angeschlossen ist.
Hierzu weist die Platte 32 eine Bohrung 34 und die Platte 31 eine Bohrung 36 auf, durch die der Gelenkbolzen 33 eingeführt wird und dann mittels einer Mutter 37 gesichert wird.

Eine kreisförmige Öffnung 38 ist in der Platte 31 vorgesehen, die zur Aufnahme eines kreisförmigen Nockens 40
dient, der in der Bohrung bzw. Öffnung 38 um eine vertikal verlaufende Achse bzw. Mittellinie 42 gedreht werden
kann. Der Nocken 40 ist mit einem kreisrunden Kragen 43
ausgestattet, dessen Durchmesser nur geringfügig kleiner
ist als der Durchmesser der Öffnung 38, so daß der Kragen 43 in der Öffnung 38 aufgenommen werden kann und um
die Mittellinie 42 gedreht werden kann. Ein Tragzapfen 44
ist mit einer flachen Oberfläche 45 versehen, die in einen
rechteckförmig ausgebildeten Schlitz 46 in der Platte 32
und durch eine im Nocken 40 vorgesehene Bohrung 47 eingeführt werden kann. Die Bohrung 47 verläuft koaxial zu einer
zweiten Nockenachse 41, und diese zweite Nockenachse 41
ist mit Abstand und parallel zur Mittellinie bzw. Achse 42
des Nockens 40 angeordnet. Eine Mutter 48 ist auf den Tragzapfen 44 aufgeschraubt, wie aus Fig. 4 hervorgeht. Der Nokken 40 weist eine Schulter bzw. einen Kragen 49 auf, der
gegen die Unterseite der Platte 31 zur Anlage kommt. Ein
Stellteil bzw. ein Handgriff 50 ist an dem Kragen 49 angeordnet, um somit den Nocken 40 leichter zu verstellen.
Durch den Handgriff 50 läßt sich außerdem ohne weiteres
die genaue Position des Nockens ermitteln. Hierzu kann an
der Unterseite der Platte eine Skala vorgesehen sein.

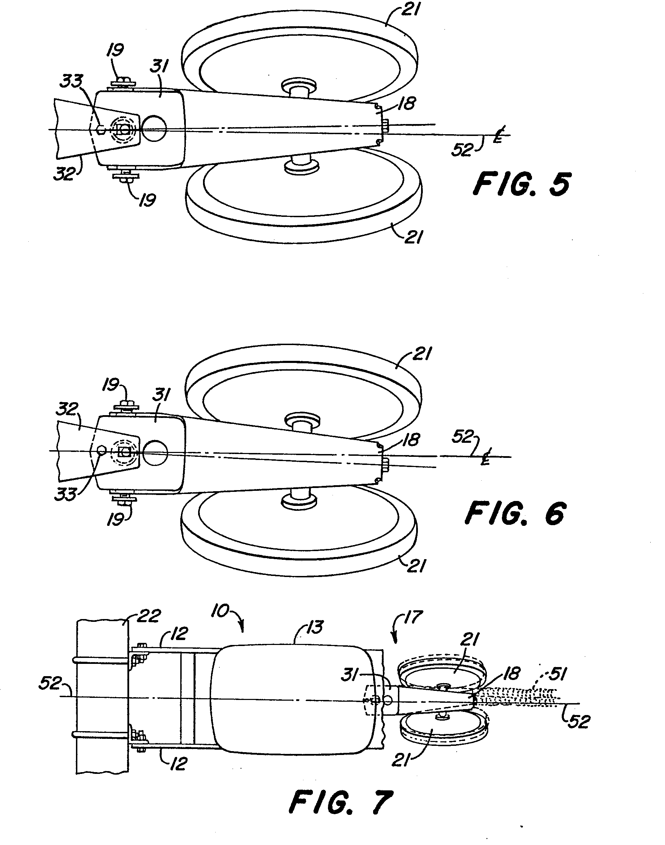

Ist beispielsweise im Arbeitseinsatz (Fig. 7) die Zudeckeinrichtung 17 aus irgendeinem Grund nicht genau zur Mittellinie 52 der Furche 51 (siehe hierzu gepunktete Linie
in Fig. 7) ausgerichtet, während der Tragarm 18 der Platte 31
auf der Mittellinie 52 der Sävorrichtung 10 verläuft, so
kann eine entsprechende Anpassung des Tragarmes 18 vorgenommen werden. Wie aus Fig. 7 ferner hervorgeht, können der
Tragarm 18 und die Platte 31 die in Fig. 7 in ausgezogenen
Linien dargestellte Position einnehmen, in der der Tragarm 18 und die Platte 31 auf der Mittellinie 52 verlaufen und die Furche 51 seitlich versetzt ist. Um die Zudeckeinrichtung 17 genau über die Furche 51 auszurichten, muß die Furchenzudeckeinrichtung 17 entsprechend mit Bezug auf die Fahrtrichtung (siehe Fig. 8) nach rechts verstellt werden. Um eine derartige Verstellung vornehmen zu können, wird der Handgriff 50 des Nockens 40 aus seiner Stellung, in der er genau auf der Mittellinie verläuft, in eine Stellung nach rechts gedreht (siehe ausgezogene Linien in Fig. 8), so daß hierdurch der Nocken 40 den Tragarm 18 um den Gelenkbolzen 33 nach rechts verschwenkt (siehe ausgezogene Linien in Fig. 8). Soll beispielsweise der Tragarm 18 der Zudeckeinrichtung 17 links von der Mittellinie 52 verstellt werden, so muß der Handgriff 50 des Nockens 40 aus seiner Mittelstellung nach rechts, also aus der Stellung gemäß Fig. 2 in die Stellung gemäß Fig. 9, verstellt werden (siehe ausgezogene Linien in Fig. 9 und Fig. 6). In der Stellung gemäß Fig. 6 und 9 befinden sich der Tragarm 18 und die Platte 31 links von der Mittellinie 52. Durch diese Maßnahme läßt sich auf einfache, schnelle Weise die Zudeckvorrichtung genau über der Furche 51 ausrichten.

Patentansprüche

1. Sävorrichtung (10) für eine Sämaschine, die an einem Rahmen (11, Platte 32) der Sämaschine angeordnet ist und an einem verstellbar angeordneten Tragarm (18) eine Zudeckeinrichtung (17) aufweist, dadurch gekennzeichnet, daß der Zudeckeinrichtung (17) eine Stellvorrichtung (30) zugeordnet ist, die mindestens eine an den Rahmen (11) der Sävorrichtung (10) gelenkig angeschlossene, um eine vertikale Achse verstellbare Platte (31) zur Aufnahme der Tragarme (18) aufweist, wobei zur Verstellung der Platte (31) um die vertikale Achse eine Nockenvorrichtung (Nocken 40) wirkungsmäßig mit dem Rahmen (11, Platte 32) und der Platte (31) verbunden ist.

2. Vorrichtung nach Anspruch 1, dadurch gekennzeichnet, daß die Platte (31) eine kreisförmige Öffnung (38), den daran angeschlossenen Rahmen (11, Platte 32) mit einem Schlitz (46) und der Nocken (40) einen um eine erste Nockenachse (41) drehbaren, in der Öffnung (38) aufgenommenen Kragen (43) aufweist, wobei der Nocken (40) über einen Tragzapfen (44) die Platte (31) gelenkig mit dem Rahmen (11, Platte 32) verbindet, der um mindestens eine vertikale Achse (Gelenkbolzen 33) verschwenkbar ist.

3. Vorrichtung nach Anspruch 1 oder 2, dadurch gekennzeichnet, daß der Nocken (40) eine zweite vertikale Achse (42) aufweist, die parallel und mit Abstand zur ersten Nockenachse (41) verläuft, die koaxial zum Nocken (40) angeordnet ist.

4. Vorrichtung nach einem oder mehreren der vorhergehenden Ansprüche, dadurch gekennzeichnet, daß der Kragen (43) des Nockens (40) exzentrisch zur ersten Nockenachse (41) verläuft.

5. Vorrichtung nach einem oder mehreren der vorhergehenden Ansprüche, dadurch gekennzeichnet, daß der Nocken (40) mit einem Stellteil (Handgriff 50) ausgerüstet ist, dem eine Skaleneinteilung zugeordnet sein kann.

6. Vorrichtung nach einem oder mehreren der vorhergehenden Ansprüche, dadurch gekennzeichnet, daß der Nocken (40) bzw. die verschwenkbare Platte (31) über Feststellelemente arretierbar ist.

7. Vorrichtung nach einem oder mehreren der vorhergehenden Ansprüche, dadurch gekennzeichnet, daß der Tragzapfen (44) sich durch den Schlitz (46) in einer am Rahmen (11) angeordneten Platte (32) und durch die kreisrunde Öffnung (38) sowie durch eine im Nocken (40) vorgesehene Bohrung (47) erstreckt und mittels einer Mutter (48) sicherbar ist, wobei durch Drehen des Nockens (40) um die erste Achse (41) der Tragzapfen (44) in den Schlitz (46) verschoben wird.

8. Vorrichtung nach einem oder mehreren der vorhergehenden Ansprüche, dadurch gekennzeichnet, daß der Tragzapfen (44) zwei gegenüberliegende flache Führungsflächen aufweist, die im Schlitz (46) aufgenommen sind und ein Drehen des Tragzapfens im Schlitz (46) verhindern.

9. Vorrichtung nach einem oder mehreren der vorhergehenden Ansprüche, dadurch gekennzeichnet, daß an der horizontal verschwenkbaren Platte (31) die Zudeckeinrichtung (17) mittels eines vertikal verschwenkbaren Tragarmes (18) angeschlossen ist, wobei die Platte (31) über einen vertikal verlaufenden Gelenkbolzen (33) an die zweite Platte (32) gelenkig angeschlossen ist.

1/3

FIG. 1

FIG. 8

FIG. 9

FIG. 2

**FIG. 3**

**FIG. 4**

3/3

FIG. 5

FIG. 6

FIG. 7

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | AU-B- 515 956 (I.M. JANKE et al.) <br> * Figuren * | 1 | A 01 C  5/06 |
| A | US-A-4 273 057 (L.R. POLLARD) <br> * Spalte 3, Zeile 67 - Spalte 4, Zeile 25; Figuren * | 1,3 | |
| D,A | US-A-4 307 674 (M.D. JENNINGS et al.) <br> * Figuren * | 1 | |

RECHERCHIERTE SACHGEBIETE (Int. Cl.4)

A 01 C  5/00

Der vorliegende Recherchenbericht wurde für alle Patentansprüche erstellt.

| Recherchenort | Abschlußdatum der Recherche | Prüfer |
|---|---|---|
| BERLIN | 20-12-1984 | WUNDERLICH J E |